# EUROPÄISCHE PATENTSCHRIFT

(11) **EP 1 985 480 B1**
(45) Veröffentlichungstag und Bekanntmachung des Hinweises auf die Patenterteilung: **19.05.2010**
(21) Anmeldenummer: 08007708.4
(22) Anmeldetag: 21.04.2008
(51) Int. Cl.: B60H 1/24

(54) **Entlüftungsklappe**
Ventilation flap
Clapet d'aération

(30) Priorität: 26.04.2007 DE 202007006724 U
(43) Veröffentlichungstag der Anmeldung: 29.10.2008
(73) Patentinhaber: TRW Automotive Electronics & Components GmbH, 78315 Radolfzell (DE)
(72) Erfinder: Dippel, Thomas, 67680 Neuhemsbach (DE)
(74) Vertreter: Prinz & Partner

(56) Entgegenhaltungen:
- EP-A- 0 439 159
- EP-A- 0 728 605
- EP-A- 1 491 373
- DE-A1- 3 601 853
- DE-A1- 19 629 115
- FR-A- 2 792 869

## Beschreibung

Die Erfindung betrifft eine Entlüftungsklappe, insbesondere zur Entlüftung des Innenraums eines Fahrzeugs, mit einem aus einem ersten Material bestehenden Rahmen und wenigstens einer Rückschlagklappe.

Eine solche Entlüftungsklappe ermöglicht es, die über ein Lüftungssystem dem Fahrzeuginnenraum zugeführte Luft abzuführen. Wenn keine Luft aus dem Fahrzeuginnenraum ausströmt, liegt die Rückschlagklappe am Rahmen an, so daß ein Eindringen von Feuchtigkeit, Abgas oder Schmutz in den Innenraum verhindert ist. Es ist bekannt, derartige Entlüftungsklappen im Zweikomponenten-Spritzgußverfahren herzustellen, wobei der Rahmen aus einer Hartmaterialkomponente besteht, während die Rückschlagklappe aus einer weicheren Materialkomponente gebildet ist. Zur Befestigung der Entlüftungsklappe in einer Öffnung der Fahrzeugkarosserie weist der Rahmen für gewöhnlich mehrere Befestigungselemente sowie eine auf seiner der Fahrzeugkarosserie zugewandten Seite angebrachte Dichtung auf, die üblicherweise geschäumt oder ebenfalls aus einer Weichmaterialkomponente gespritzt ist. Die Dichtung beeinflußt die zum Einsetzen der Entlüftungsklappe in die Öffnung der Fahrzeugkarosserie benötigte Kraft, da sie bei der Montage zusammengedrückt werden muß. Bei einer geschäumten Dichtung wird die Montagekraft durch die Art des verwendeten Schaums bestimmt und kann nur durch Verwendung einer neuen Schaummischung geändert werden. Bei einer angespritzten Weichmaterialkomponente bestimmen die Flexibilität des Materials sowie das Design der Dichtung die Montagekraft und die Dichtheit des Systems. Die Weichmaterialkomponente muß zudem ein gewisses Rückstellvermögen aufweisen, um für eine zuverlässige Abdichtung zu sorgen.

DE 36 01 853 offenbart eine Entlüftungsklappe mit folgenden aus einem ersten Material bestehenden Elementen: Rahmen, Rückschlagklappe, Federelement und Dichtung nach dem Oberbegriff des Anspruchs 1.

EP 0 728 605 offenbart eine Entlüftungsklappe mit einem aus einem ersten Material bestehenden Rückschlagklappe, Federelement und Dichtung, wobei der Rahmen aus einem zweiten Material besteht.

FR 2 792 869 offenbart eine Entlüftungsklappe mit einem aus einem ersten Material bestehenden Rahmen, an der eine umlaufende Dichtlippe aus einem zweiten Material aufgeschweißt ist.

Demgegenüber schafft die Erfindung eine Entlüftungsklappe, die sich durch eine besonders einfache und kostengünstige Herstellung sowie eine zuverlässige Abdichtung gegenüber einem Trägerteil auszeichnet.

Erfindungsgemäß wird dies dadurch erreicht, daß an den Rahmen ein umlaufendes Federelement angeformt ist, das zumindest in Teilbereichen eine Dichtung aus einem zweiten Material aufweist. Dabei liegt das Federelement im montierten Zustand zumindest teilweise an einem Trägerteil des Fahrzeugs an, wobei die Dichtung auf der dem Trägerteil zugewandten Seite des Federelements vorgesehen ist. Durch die erfindungsgemäße Ausgestaltung läßt sich der Anteil der weichen Komponente, aus der die Dichtung bevorzugt geformt wird, auf ein Minimum reduzieren. Das Federelement selbst ist aus einer härteren Materialkomponente hergestellt und so ausgelegt, daß es eine Kraft auf die Dichtung aufbringt, die diese fest gegen das Trägerteil des Fahrzeugs drückt. Aus diesem Grund braucht das für die Dichtung verwendete Material selbst kein Rückstellvermögen aufzuweisen.

Vorzugsweise besteht das Federelement ebenfalls aus dem ersten Material, insbesondere ist es einstückig mit dem Rahmen ausgebildet. Somit lassen sich das Federelement und der Rahmen in einem einzigen Arbeitsgang herstellen.

Um eine besonders gute Dichtwirkung zu erzielen, kann das Federelement im Ausgangszustand vor der Montage mit der durch den Rahmen definierten Ebene einen spitzen Winkel einschließen. Im montierten Zustand verringert sich dieser Winkel, und das Federelement übt aufgrund seiner Vorspannung eine vergleichsweise große Kraft auf die Dichtung aus.

Die Dichtung ist bevorzugt in einem Randbereich des Federelements umlaufend angeordnet und sorgt somit für eine zuverlässige Abdichtung zwischen der Entlüftungsklappe und dem Trägerteil des Fahrzeugs.

Um die durch das Federelement auf die Dichtung ausgeübte Kraft sowie die Montagekraft individuell einstellen zu können, kann das Federelement mehrere Aussparungen aufweisen.

Die Aussparungen sind bevorzugt nahe dem Übergangsbereich zum Rahmen umlaufend angeordnet und beeinflussen so die Verformbarkeit des Federelements gegenüber dem Rahmen.

Zur Erzielung eines geschlossenen Dichtsystems sind die Aussparungen vorzugsweise durch das Material der Dichtung verschlossen.

Bei der Entlüftungsklappe handelt es sich insbesondere um ein Mehrkomponenten-Spritzgußteil, wobei der Rahmen und das Federelement aus einer harten Materialkomponente und die Rückschlagklappe und die Dichtung jeweils aus einer weichen Materialkomponente gefertigt sind. Dadurch ergibt sich ein sogenanntes "Werkzeug-fallendes" Teil, d.h. eine Montage oder ein zweiter Prozeß sind nicht erforderlich. Insbesondere werden die Klappe(n) und die Dichtung in einem einzigen Arbeitsgang aus derselben Materialkomponente gespritzt, alternativ ist es jedoch auch möglich, zwei unterschiedliche Materialien zu verwenden. Ebenso ist es denkbar, eine oder mehrere Klappen nachträglich in den gespritzten Rahmen mit Federelement und Dichtung zu montieren.

Weitere Merkmale und Vorteile der Erfindung ergeben sich aus der nachfolgenden Beschreibung einer bevorzugten Ausführungsform anhand der beigefügten Zeichnung. In dieser zeigt:
- Figur 1 eine perspektivische Ansicht einer erfindungsgemäßen Entlüftungsklappe;
- Figur 2 einen Schnitt längs der Linie II-II in Figur 1; und
- Figur 3 einen Schnitt längs der Linie III-III in Figur 1.

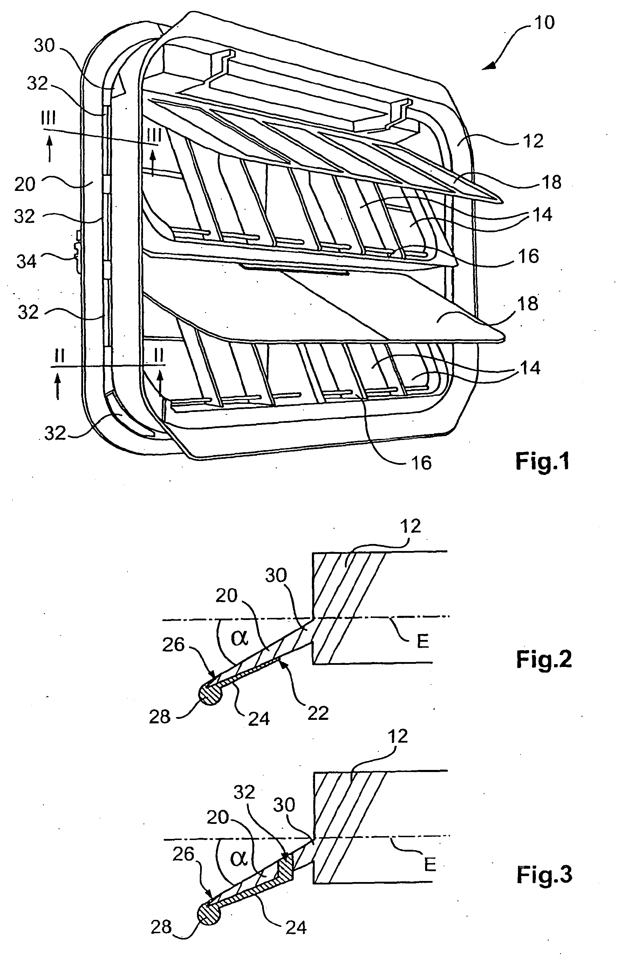

Figur 1 zeigt eine Entlüftungsklappe 10, die in eine Öffnung in einem Trägerteil eines Fahrzeugs eingesetzt werden kann und einen Rahmen 12 aus einem ersten, harten Kunststoffmaterial aufweist. Der Rahmen 12 ist gitterförmig ausgebildet und weist mehrere Ausströmöffnungen 14 auf. Durch die gitterartige Struktur sind zwei bezüglich der Darstellung in Figur 1 übereinander angeordnete Ventilsitze 16 gebildet, die gegenüber der durch den Rahmen 12 definierten Ebene geneigt angeordnet sind. Jedem Ventilsitz 16 ist eine Rückschlagklappe 18 aus einem zweiten, weicheren Kunststoffmaterial zugeordnet, wobei beide Rückschlagklappen 18 in Figur 1 im geöffneten Zustand gezeigt sind.

An den Rahmen 12 ist ein umlaufendes Federelement 20 angeformt, das einstückig mit dem Rahmen 12 ausgebildet ist und somit ebenfalls aus dem ersten Material, nämlich dem härteren Kunststoffmaterial, besteht. Wie insbesondere auch aus den Figuren 2 und 3 hervorgeht, schließt das Federelement 20 zumindest im Ausgangszustand vor der Montage der Entlüftungsklappe 10 mit der durch den Rahmen 12 definierten Ebene E einen spitzen Winkel α ein. Auf der dem Trägerteil zugewandten Seite 22 des Federelements 20 (also der Unterseite des Federelements 20 gemäß der Darstellung in den Figuren 2 und 3) ist eine Dichtung 24 vorgesehen, die ebenfalls aus dem zweiten, weichen Kunststoffmaterial besteht und insbesondere an das Federelement 20 angespritzt ist. Die Dichtung 24 ist in einem Randbereich 26 des Federelements 20 umlaufend um den gesamten Rahmen 12 angeordnet und weist am äußeren Rand des Federelements 20 einen Materialwulst 28 auf. Das Federelement 20 hat nahe dem Übergangsbereich 30 zum Rahmen 12 mehrere Aussparungen 32, die in gewissen Abständen zueinander umlaufend angeordnet sind. Wie aus Figur 3 ersichtlich, sind die Aussparungen 32 durch das Material der Dichtung 24 verschlossen.

Zur Befestigung der Entlüftungsklappe 10 am Trägerteil des Fahrzeugs sind außerdem mehrere Befestigungslaschen 34 vorgesehen, die einstückig mit dem Rahmen 12 ausgebildet sind und von denen eine in Figur 1 angedeutet ist.

Die Entlüftungsklappe 10 ist ein Mehrkomponenten-Spritzgußteil, wobei der Rahmen 12 und das Federelement 20 in einem ersten Schritt aus der ersten, harten Materialkomponente gespritzt werden, und anschließend die Rückschlagklappen 18 sowie die Dichtung 24 aus der zweiten, weichen Materialkomponente angespritzt werden. Alternativ können auch die Klappen nachträglich montiert werden.

Zur Montage der Entlüftungsklappe 10 im Trägerteil wird diese mit der Seite 22 des Federelements 20 voran in eine Öffnung des Trägerteils eingeschoben, wodurch das Federelement 20 gegenüber der Darstellung der Figuren 2 und 3 leicht nach oben gebogen wird, bis die Befestigungslaschen 34 die Öffnung im Trägerteil hintergreifen. Die zum Einsetzen benötigte Kraft ist durch entsprechende Ausgestaltung der Aussparungen 32 nahezu beliebig einstellbar. Das Federelement 20 weist im montierten Zustand eine Vorspannung auf, durch die die Dichtung 24 gegen das Trägerteil gedrückt wird und so für eine sichere Abdichtung sorgt.

## Patentansprüche

1. Entlüftungsklappe, insbesondere zur Entlüftung des Innenraums eines Fahrzeugs, mit einem aus einem ersten Material bestehenden Rahmen (12) und wenigstens einer Rückschlagklappe (18), wobei an den Rahmen (12) ein umlaufendes Federelement (20) angeformt ist, das zumindest in Teilbereichen eine Dichtung (24) aufweist, **dadurch gekennzeichnet, daß** die Dichtung (24) aus einem zweiten Material besteht.

2. Entlüftungsklappe nach Anspruch 1, **dadurch gekennzeichnet, daß** das Federelement (20) ebenfalls aus dem ersten Material besteht, insbesondere einstückig mit dem Rahmen (12) ausgebildet ist.

3. Entlüftungsklappe nach Anspruch 1 oder 2, **dadurch gekennzeichnet, daß** das Federelement (20) im Ausgangszustand vor der Montage mit der durch den Rahmen (12) definierten Ebene (E) einen spitzen Winkel (α) einschließt.

4. Entlüftungsklappe nach einem der vorhergehenden Ansprüche, **dadurch gekennzeichnet, daß** die Dichtung (24) in einem Randbereich (26) des Federelements (20) umlaufend angeordnet ist.

5. Entlüftungsklappe nach einem der vorhergehenden Ansprüche, **dadurch gekennzeichnet, daß** das Federelement (20) mehrere Aussparungen (32) aufweist.

6. Entlüftungsklappe nach Anspruch 5, **dadurch gekennzeichnet, daß** die Aussparungen (32) nahe dem Übergangsbereich (30) zum Rahmen (12) umlaufend angeordnet sind.

7. Entlüftungsklappe nach Anspruch 5 oder 6, **dadurch gekennzeichnet, daß** die Aussparungen (32) durch das Material der Dichtung (24) verschlossen sind.

8. Entlüftungsklappe nach einem der vorhergehenden Ansprüche, **dadurch gekennzeichnet, daß** es sich um ein Mehrkomponenten-Spritzgußteil handelt, wobei der Rahmen (12) und das Federelement (20) aus einer harten Materialkomponente und die Rückschlagklappe (18) und die Dichtung (24) jeweils aus einer weichen Materialkomponente gefertigt sind.

## Claims

1. A vent flap, in particular for venting the interior of a vehicle, comprising a frame (12) consisting of a first material and at least one non-return flap (18), the frame (12) having a continuously surrounding spring member (20) formed integrally therewith which includes, at least in partial regions, a seal (24), **characterized in that** the seal (24) consists of a second material.

2. The vent flap according to claim 1, **characterized in that** the spring member (20) likewise consists of the first material, more particularly is formed in one piece with the frame (12).

3. The vent flap according to claim 1 or 2, **characterized in that** in the initial condition prior to installation, the spring member (20) includes an acute angle (α) with the plane (E) defined by the frame (12).

4. The vent flap according to any of the preceding claims, **characterized in that** the seal (24) is arranged to run all around the periphery in an edge region (26) of the spring member (20).

5. The vent flap according to any of the preceding claims, **characterized in that** the spring member (20) includes a plurality of recesses (32).

6. The vent flap according to claim 5, **characterized in that** the recesses (32) are arranged all around the periphery near the region (30) of transition to the frame (12).

7. The vent flap according to claim 5 or 6, **characterized in that** the recesses (32) are closed off by the material of the seal (24).

8. The vent flap according to any of the preceding claims, **characterized in that** it is a multi-component injection-molded part, the frame (12) and the spring member (20) being produced from a hard material component and the non-return flap (18) and the seal (24) being each produced from a soft material component.

## Revendications

1. Volet d'aération, en particulier pour l'aération de l'habitacle d'un véhicule, comportant un cadre (12) réalisé en une première matière et au moins un clapet antiretour (18), un élément ressort (20) circonférentiel qui présente un joint (24) au moins dans des zones partielles étant moulé avec le cadre (12), **caractérisé en ce que** le joint (24) est réalisé en une deuxième matière.

2. Volet d'aération selon la revendication 1, **caractérisé en ce que** l'élément ressort (20) est également réalisé en la première matière, en particulier d'un seul tenant avec le cadre (12).

3. Volet d'aération selon la revendication 1 ou 2, **caractérisé en ce qu'**à l'état initial avant le montage, l'élément ressort (20) renferme un angle aigu (α) avec le plan (E) défini par la cadre (12).

4. Volet d'aération selon l'une des revendications précédentes, **caractérisé en ce que** le joint (24) est agencé de manière circonférentielle dans une zone de bord (26) de l'élément ressort (20).

5. Volet d'aération selon l'une des revendications précédentes, **caractérisé en ce que** l'élément ressort (20) présente plusieurs évidements (32).

6. Volet d'aération selon la revendication 5, **caractérisé en ce que** les évidements (32) sont agencés de manière circonférentielle à proximité de la zone de transition (30) vers le cadre (12).

7. Volet d'aération selon la revendication 5 ou 6, **caractérisé en ce que** les évidements (32) sont obturés par la matière du joint (24).

8. Volet d'aération selon l'une des revendications précédentes, **caractérisé en ce qu'**il s'agit d'une pièce moulée par injection à plusieurs composants, le cadre (12) et l'élément ressort (20) étant réalisés à partir d'un composant de matière dur, et le clapet antiretour (18) et le joint (24) étant chacun réalisés à partir d'un composant de matière souple.
